# FASCICULE DE BREVET EUROPEEN

(11) **EP 3 369 800 B1**
(45) Date de publication et mention de la délivrance du brevet: **25.12.2019**
(21) Numéro de dépôt: 18158558.9
(22) Date de dépôt: 26.02.2018
(51) Int. Cl.: C10G 19/08, B01D 53/52, B01D 53/78, B01D 53/96, C10L 3/12

(54) **PROCÉDÉ AMELIORÉ DE RÉGÉNÉRATION D'UNE SOLUTION ALCALINE UTILISÉE DANS UN PROCÉDÉ D'EXTRACTION DE COMPOSÉS SOUFRÉS NE COMPORTANT PAS D'ÉTAPE DE LAVAGE**
VERBESSERTES VERFAHREN ZUR REGENERATION EINER ALKALINEN LÖSUNG, DIE BEI EINEM EXTRAKTIONSVERFAHREN VON SCHWEFELVERBINDUNGEN EINGESETZT WIRD, DAS KEINE REINIGUNGSPHASE VORSIEHT
IMPROVED METHOD FOR REGENERATING AN ALKALINE SOLUTION USED IN A METHOD FOR EXTRACTING SULPHUROUS COMPOUNDS NOT COMPRISING A WASHING STEP

(30) Priorité: 01.03.2017 FR 1751677
(43) Date de publication de la demande: 05.09.2018
(73) Titulaire: AXENS, 92508 Rueil-Malmaison Cedex (FR)
(72) Inventeur: BESNAULT, Jean-Michel, 78110 le Vesinet (FR); DO, Mai Phuong, 50480 KUALA LUMPUR (MY); FERRERO, Sebastien, 92370 CHAVILLE (FR)
(74) Mandataire: IFP Energies nouvelles

(56) Documents cités:
- WO-A1-2005/121279
- FR-A- 1 249 134
- FR-A- 1 254 713
- US-A- 5 354 482
- US-A1- 2003 072 707

## Description

L'invention concerne le domaine de l'extraction des composés soufrés tels que les mercaptans, le COS, l'H₂S ou le CS₂ d'une coupe hydrocarbonée. Cette extraction sélective est réalisée en mettant en contact la coupe hydrocarbonée en phase liquide avec une solution alcaline, par exemple de la soude, pour former des espèces de type mercaptides et des sels. Après extraction, la solution alcaline chargée en mercaptides est régénérée.

La régénération de la solution alcaline consiste en une réaction d'oxydation exothermique en présence d'un catalyseur convertissant les espèces de type mercaptides en disulfures. Lesdits disulfures constituent une phase hydrocarbure peu soluble dans la solution alcaline. La séparation des effluents du réacteur produit d'une part une solution alcaline partiellement régénérée, d'autre part une phase hydrocarbure riche en disulfures.

La solution alcaline partiellement régénérée peut être utilisée directement à nouveau dans la section extraction, ou bien peut être traitée pour en extraire les disulfures résiduels qu'elle contient avant d'être introduite à nouveau à l'extracteur.

Le procédé selon l'invention consiste à améliorer le procédé de régénération de la solution alcaline, en diminuant l'excès de solution alcaline utilisée pour contrôler la montée en température due à la réaction d'oxydation. Le procédé selon l'invention permet ainsi de diminuer la quantité de solution alcaline dans la section de régénération et donc, de réduire l'investissement, les coûts opératoires, l'inventaire de solution alcaline et de catalyseur dans la section régénération. Au final le procédé selon l'invention permet d'augmenter l'efficacité énergétique du procédé.

Les procédés d'élimination des mercaptans sont utilisés en raffinerie pour les coupes hydrocarbonées comprenant essentiellement des coupes légères allant du méthane jusqu'à la coupe kérosène afin de les transformer en produits valorisables. En effet, la présence de mercaptans rend l'hydrocarbure odorant et instable avec une tendance à former du sulfure d'hydrogène. Les mercaptans se rencontrent dans un grand nombre de charges hydrocarbonées, parmi lesquelles on peut citer les charges issues de la distillation du pétrole brut, par exemple des GPL, naphta, essences ou kérosène, ou des charges issues de l'extraction de gaz de champs ou de l'extraction d'huile de schiste. En outre, les charges concernées peuvent également être issues d'unité de craquage. Cette liste n'est pas exhaustive.

### DESCRIPTION SOMMAIRE DES FIGURES

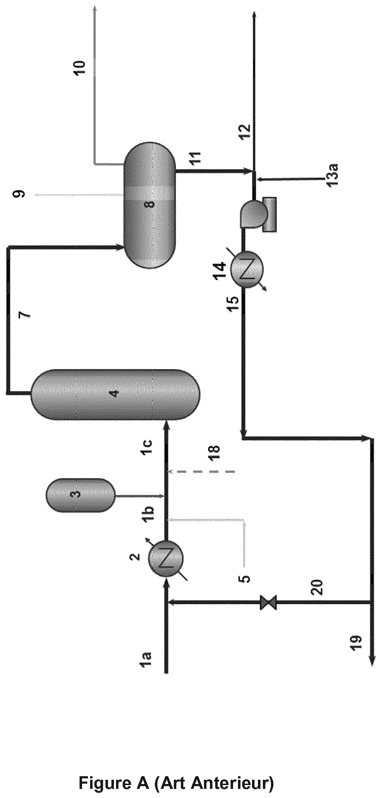

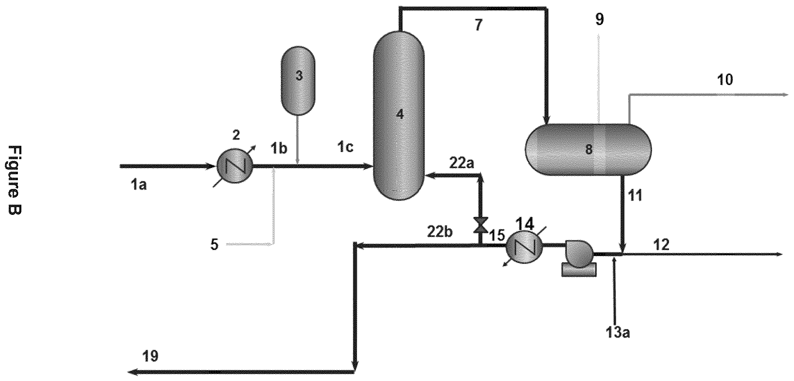

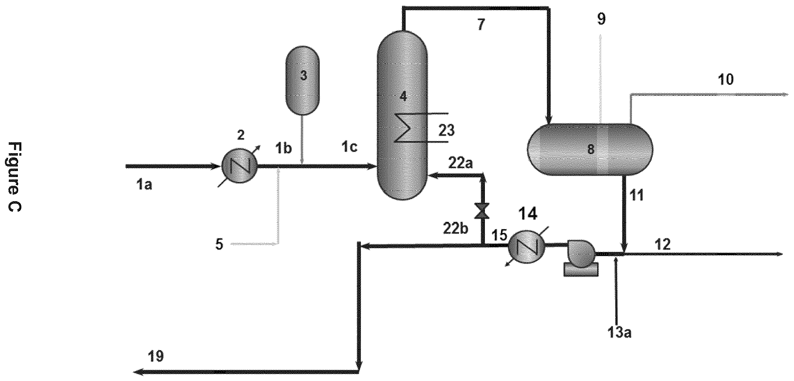

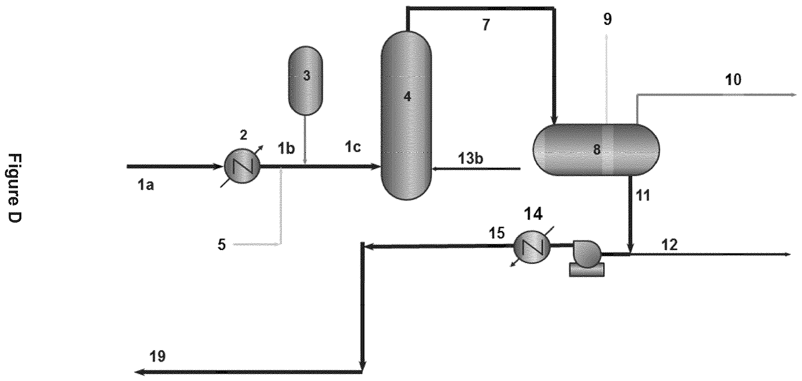

La figure A représente le schéma de la section de régénération de la solution alcaline usée issue de la section d'extraction des composés soufrés selon l'art antérieur.
La figure B représente le schéma de la section de régénération de la solution alcaline usée issue de la section d'extraction selon l'invention dans une première variante.
La figure C représente le schéma de la section de régénération de la solution alcaline usée issue de la section d'extraction selon l'invention dans une seconde variante.
La figure D représente le schéma de la section de régénération de la solution alcaline usée issue de la section d'extraction selon l'invention dans une troisième variante.

### EXAMEN DE L'ART ANTERIEUR

L'extraction des composés soufrés d'une coupe hydrocarbure (essence, GPL...) par extraction liquide-liquide avec une solution alcaline est bien connue dans l'état de la technique. Lorsque la majorité des espèces soufrées sont des mercaptans, ou thiols, un type de procédé très répandu consiste à réaliser une extraction préférentiellement à contre-courant des espèces soufrées à l'aide d'une solution alcaline aqueuse, en général de la soude, tournant en boucle dans le procédé, comme décrit dans le brevet US 4,081,354.

La solution alcaline sortant de la section extraction est appelée solution alcaline enrichie en composés soufrés et est envoyée vers la section de régénération. Nous l'appelons dans la suite du texte solution alcaline à régénérer ou solution alcaline usée.

Dans la section régénération, la solution alcaline à régénérer est mise en contact dans le réacteur d'oxydation avec un agent oxydant, en général de l'air ou de l'oxygène pur, ou un gaz oxydant, en présence d'un catalyseur dissous, par exemple à base de phtalocyanine de cobalt pour convertir les espèces de type mercaptides en disulfures.

Les mercaptides peuvent se définir de manière générale comme des sels de mercaptan, contenant l'ion RS-, où R est un groupe alkyl ou aryl.

Les paramètres associés à la réaction d'oxydation sont choisis de manière à oxyder la quasi-totalité des mercaptides présents dans la solution alcaline en disulfures qui sont peu solubles dans la phase alcaline. De façon optionnelle, la solution alcaline peut être mise en contact simultanément dans le réacteur d'oxydation avec une coupe hydrocarbonée ne contenant pas ou peu de composés soufrés, typiquement un hydrocarbure desulfurisé telle qu'une coupe naphta ou une coupe essence desulfurisée dans laquelle se dissolvent les disulfures formés par la réaction.

La réaction d'oxydation est exothermique et la température du fluide procédé dans le réacteur d'oxydation doit être maîtrisée. Dans les procédés selon l'art antérieur, le moyen de refroidissement utilisé est une ligne permettant de recirculer au moins une partie de la solution alcaline régénérée de la sortie de la section de régénération à l'entrée de la section de régénération, « bypassant », c'est-à-dire contournant entièrement la section d'extraction. Ainsi un excès de solution alcaline régénérée alimente le réacteur d'oxydation et est utilisée pour absorber une partie de la chaleur dégagée par la réaction d'oxydation, ce qui permet de contrôler la montée en température dans le réacteur d'oxydation.

Dans la suite du texte, on appellera « excès de solution alcaline » la quantité de solution alcaline utilisée pour contrôler la montée en température dans le réacteur.

Plus précisément, on appelle cet excès « excès de solution alcaline recirculé » lorsque la solution alcaline utilisée pour contrôler la montée en température du réacteur provient d'une ligne de recirculation interne à la section de régénération. Lorsque la teneur en composés soufrés dans la charge augmente, l'excès de solution alcaline utilisé pour absorber les calories dégagées par la réaction d'oxydation augmente et devient relativement importante comparée à la quantité de solution alcaline usée provenant de l'extraction.

L'excès de solution alcaline utilisé dans le réacteur d'oxydation a un impact sur la quantité totale de solution alcaline circulant dans la section de régénération. Cette quantité totale influe sur l'inventaire de solution alcaline dans la section de régénération, donc sur le coût des investissements et le coût des opérations.

Le document WO 2005/121279 A1 divulgue un appareil et procédé d'extraction de composés sulfurés d'un flux hydrocarboné.

Aucun des documents de l'art antérieur ne divulgue de solution permettant de réduire l'excès de solution alcaline utilisée pour contrôler la montée en température du réacteur, tout en conservant une exothermicité identique dans le réacteur d'oxydation.

L'invention diffère de l'art antérieur en ce que :
- le débit de solution alcaline dans la section de régénerationest réduit comparé à l'art antérieur.
- la taille des équipements est réduite, l'investissement est minimisé et la performance énergétique du procédé améliorée.
- l'inventaire de solution alcaline de l'unité est réduit, ce qui réduit la consommation et la purge en solution alcaline lors des phases transitoires par exemple, le démarrage et l'arrêt de l'unité.
- l'inventaire de catalyseur de l'unité est réduit, ce qui réduit la consommation et la purge de catalyseur lors des phases transitoires, par exemple, le démarrage et l'arrêt de l'unité.
- le contrôle de l'exothermicité dans le réacteur d'oxydation est amélioré.

### DESCRIPTION SOMMAIRE DE L'INVENTION

La présente invention consiste à améliorer le procédé de régénération de la solution alcaline, en réduisant l'excès de solution alcaline recirculée, tout en conservant une exothermicité identique dans le réacteur d'oxydation de ladite section de régénération.

Selon l'invention, on utilise préférentiellement comme moyen de refroidissement pour contrôler la température du réacteur d'oxydation, un excès de solution alcaline recirculé constitué par de la solution alcaline partiellement régénérée. Ladite solution partiellement régénérée est appauvrie en mercaptides, mais contient des disulfures résiduels. Par exemple, il peut s'agir de solution alcaline telle qu'elle sort du réacteur d'oxydation, après séparation de la phase hydrocarbure riche en disulfures et refroidissement.

En effet, à la sortie du réacteur d'oxydation, la phase alcaline est séparée de la phase hydrocarbure riche en disulfures. Ladite phase est constituée par des disulfures uniquement, ou par une coupe hydrocarbonée riche en disulfures, si une coupe hydrocarbonée a été simultanément injectée dans le réacteur d'oxydation conduisant à la dissolution des disulfures dans cette coupe.

La solution alcaline, issue de la séparation, ne contient plus de mercaptides mais des disulfures résiduels de l'ordre de 200 ppm (poids). On l'appelle solution alcaline partiellement régénérée, ou, dans le cas où la solution alcaline est de la soude, soude partiellement régénérée.

Après séparation, ladite solution alcaline partiellement régénérée est refroidie et peut être utilisée à nouveau à la section extraction.

La solution alcaline sortant de la section régénération est appelée solution alcaline régénérée ou solution alcaline appauvrie en composés soufrés (« Lean caustic » selon la terminologie anglo-saxonne). Nous l'appelons dans la suite du texte solution alcaline régénérée.

L'invention peut être utilisée avantageusement dans le cadre d'un « dégoulottage » d'unité, c'est-à-dire d'une augmentation de sa capacité de production.

La présente invention consiste donc en un procédé de régénération d'une solution alcaline usée utilisée dans une unité d'extraction des composés soufrés d'une coupe hydrocarbonée quelconque.

Le procédé de régénération de solution alcaline usée selon l'invention comprend la suite d'étapes suivantes :
a) on envoie la solution alcaline usée à régénérer dans un réacteur d'oxydation (4) dans lequel elle est mise en contact avec un agent oxydant (5) et un catalyseur (3), et éventuellement avec une coupe hydrocarbonée, ladite solution alcaline usée étant préalablement réchauffée au moyen de l'échangeur (2) à une température comprise typiquement entre 40°C et 50°C, et dans lequel, la montée en température est contrôlée par un moyen de refroidissement constitué par un excès de solution alcaline envoyé directement dans ledit réacteur, en un ou plusieurs points.
b) on envoie les effluents du réacteur d'oxydation (4) dans un séparateur (8) duquel on extrait une phase hydrocarbure riche en disulfures (10) et une solution alcaline partiellement régénérée (11),
c) on refroidit la solution alcaline partiellement régénérée (11) issue de l'étape b) à une température inférieure ou égale à 45°C.

Selon une première variante, le procédé comprend, en outre, l'étape suivante :
d) on divise la solution alcaline partiellement régénérée refroidie (15) issue de c) en deux flux :
- un premier flux (22a) qui constitue l'excès de solution alcaline recirculé et qui est renvoyé vers le réacteur d'oxydation (4) et,
- un second flux (22b).

Selon une autre variante préférée, l'excès de solution alcaline est constituée de solution alcaline fraîche.

Selon une autre variante, le ou les points d'introduction de l'excès de solution alcaline dans le réacteur d'oxydation (4) sont munis d'un moyen de distribution ou d'un moyen de mélange.
Selon une autre variante, le ou les points d'introduction de l'excès de solution alcaline dans le réacteur d'oxydation (4) sont positionnés de façon à permettre de contrôler la montée en température dudit réacteur.

Généralement, le catalyseur employé dans le réacteur d'oxydation est de type phtalocyanines de cobalt ou de vanadium. Généralement, le catalyseur employé dans le réacteur d'oxydation est ajouté dans la solution alcaline à l'entrée du réacteur d'oxydation de manière à atteindre une concentration en catalyseur dans la solution alcaline comprise entre 10 et 1 000 ppm poids, préférentiellement comprise entre 10 et 500 ppm poids.
Le réacteur d'oxydation (4) peut être équipé d'un moyen de refroidissement supplémentaire (23), en plus donc de l'injection de l'excès de solution alcaline . L'excès de solution alcaline peut être refroidi, à une température inférieure d'au moins 5°C à celle de la solution alcaline partiellement régénérée refroidie (15), avant d'être renvoyé vers le réacteur d'oxydation (4).
Dans le procédé de régénération selon la présente invention, la coupe hydrocarbonée traitée dans l'unité d'extraction des composés soufrés peut aller du méthane au kérosène.

L'installation de régénération d'une solution alcaline usée utilisée dans une unité d'extraction des composés soufrés d'une coupe hydrocarbonée, selon l'invention, comprend au moins :
- un équipement (2) permettant de chauffer la solution alcaline usée avant son introduction au réacteur d'oxydation (4), à une température comprise entre 40°C et 50°C,
- un réacteur d'oxydation (4), dans lequel la solution alcaline usée est mise en contact avec un agent oxydant (5) et un catalyseur (3,)
- une conduite permettant d'injecter un excès de solution alcaline directement dans le réacteur d'oxydation (4), en un ou en plusieurs points, constituant le moyen de refroidissement utilisé pour contrôler la montée en température dudit réacteur,
- un séparateur (8) alimenté par l'effluent issu du réacteur d'oxydation (4), duquel on extrait une phase hydrocarbure riche en disulfures (10), et une solution alcaline partiellement régénérée (11),
- un moyen de refroidissement (14) permettant de refroidir la solution alcaline partiellement régénérée (11) issue du séparateur à une température inférieure ou égale à 45°C.

Selon une première variante de l'installation de régénération de solution alcaline usée selon l'invention, la conduite permettant d'injecter l'excès de solution alcaline directement dans le réacteur d'oxydation (4) est alimentée par une solution alcaline fraîche.

Selon une autre variante de l'installation de régénération de solution alcaline usée selon l'invention, la conduite permettant d'injecter l'excès de solution alcaline directement dans le réacteur d'oxydation (4) est alimentée par une solution alcaline partiellement régénérée (22a), issue de la division en deux flux de la solution alcaline partiellement régénérée refroidie (15) :
- un premier flux (22a) qui constitue l'excès de solution alcaline recirculé et qui est renvoyé vers le réacteur d'oxydation (4),
- un second flux (22b)

Selon une autre variante de l'installation de régénération de solution alcaline usée selon l'invention, le réacteur d'oxydation est équipé d'un moyen de refroidissement supplémentaire (23).

Selon une autre variante de l'installation de régénération de solution alcaline usée selon l'invention, un moyen de refroidissement supplémentaire permet de refroidir l'excès de solution alcaline recirculé à une température inférieure d'au moins 5°C à celle de la solution alcaline partiellement régénérée refroidie (15).

### DESCRIPTION DETAILLEE DE L'INVENTION

La présente invention concerne un procédé d'extraction de composés soufrés présents dans une coupe hydrocarbure, dans le cas où les espèces soufrées majoritaires sont des mercaptans, notés RSH, par exemple méthanethiol CH₃SH, éthanethiol C₂H₅SH, propanethiol C₃H₇SH, et où d'autres espèces soufrées peuvent être également présentes, comme le sulfure d'hydrogène H2S ou l'oxysulfure de carbone COS.

La charge de solution alcaline usée à traiter est alimentée en continu à la section de régénération et renvoyée en continu à la section d'extraction. Elle peut éventuellement provenir de différentes sections d'extraction distinctes et y retourner après régénération. Dans la section de régénération, la solution alcaline est apportée et purgée soit de façon discontinue (procédé par batch ou discontinu), soit de façon permanente (procédé continu) afin de maintenir sa qualité constante.

Selon l'invention, l'excès de solution alcaline partiellement régénérée recirculé vers le réacteur d'oxydation pour contrôler la montée en température, est généralement disponible à une température inférieure ou égale à 45°C, typiquement entre 10 et 45°C, préférentiellement entre 35°C et 45°C, en aval du moyen de refroidissement (14), typiquement un échangeur.

En général, la purge de solution alcaline partiellement régénérée, et l'appoint de solution alcaline fraîche correspondant sont réalisés en amont du refroidissement (14). Cet appoint et cette purge peuvent être soit continus soit intermittents. L'excès de solution alcaline recirculé peut donc aussi être un mélange de solution alcaline fraîche et de solution alcaline partiellement régénérée.

Selon une première variante de l'invention, un excès de solution alcaline (22a) est envoyé vers le réacteur d'oxydation, directement en un ou plusieurs points dudit réacteur.

Chaque point d'injection peut avantageusement être équipé d'un dispositif de distribution, telle qu'une rampe d'injection, ou éventuellement un dispositif de mélange, type boite de trempe. On parle de boite de « quench » dans la terminologie anglo saxonne. Un dispositif de distribution permet de distribuer de façon homogène l'excès de solution alcaline dans le réacteur. Un dispositif de mélange permettra, en outre, de mélanger l'excès de solution alcaline et le flux contenu dans le réacteur. Chaque point d'injection peut être muni d'un autre type de dispositif équivalent. Le réacteur d'oxydation peut être muni d'un ou plusieurs thermocouples ou de tout moyen équivalent pour mesurer la température, afin d'ajuster le ou les débits d'excès de solution alcaline à introduire en chacun des points d'injection, suivant une loi permettant de contrôler la montée en température dans le réacteur.

Le débit d'injection de solution alcaline recirculé peut être contrôlé en utilisant les mesures de température située en amont et en aval du réacteur d'oxydation.

L'excès de solution alcaline injectée dans le réacteur peut provenir d'une recirculation de solution alcaline ou bien d'un flux provenant de l'extérieur de la section de régénération.

Selon une troisième variante de l'invention, le réacteur d'oxydation est muni d'unmoyen de refroidissement supplémentaire, typiquement un équipement (23) permettant de refroidir directement le flux en circulation dans le réacteur d'oxydation (4) de manière à réduire encore l'excès de solution alcaline utilisé.

Cet équipement (23) peut être typiquement un échangeur ou tout moyen équivalent, par exemple, un échangeur latéral, une épingle ou un serpentin implanté dans le réacteur, un reflux circulant, une double enveloppe autour du réacteur. Cette liste n'est pas exhaustive. Le fluide de refroidissement peut être un flux interne à l'unité, ou un flux externe à l'unité ou une utilité froide, par exemple l'eau, ou un fluide réfrigérant spécifique. Cette troisième variante est compatible avec la première et la seconde variante de la présente invention.

Selon une autre variante de l'invention, l'excès de solution alcaline recirculé peut être refroidi, par un moyen de refroidissement supplémentaire tel qu'un échangeur additionnel ou un équipement équivalent, à une température inférieure d'au moins 5°C à celle de la solution alcaline partiellement régénérée refroidie (15), typiquement à une température comprise entre 10°C et 40°C, préférentiellement entre 10°C et 35°C.

Enfin selon une autre variante de l'invention, l'excès de solution alcaline est remplacé par l'apport d'un excès d'agent oxydant, par exemple de l'air ou de l'oxygène en amont ou directement dans le réacteur d'oxydation par au moins une injection.

Les différentes variantes de l'invention peuvent être combinées lors du design de l'unité. Elles peuvent être opérées simultanément ou alternativement. Ainsi l'unité peut être munie, d'une part, d'une ligne de recirculation permettant d'envoyer un excès de solution alcaline recirculé en un ou plusieurs points du réacteur d'oxydation (4), et d'autre part, d'un réacteur d'oxydation (4) muni d'un équipement de refroidissement (23).

Selon l'invention, pour une montée en température identique dans le réacteur d'oxydation, l'excès de solution alcaline dans la section de régénération est réduit comparé à l'art antérieur, ce qui permet de minimiser l'investissement nécessaire pour construire ces unité et d'améliorer l'efficacité énergétique du procédé et donc les coûts opératoires correspondants.

Cette partie de la description fournit des informations sur la section d'extraction qui n'est pas l'objet de la présente invention, mais permet de mieux la comprendre.

La charge à traiter, comprenant des composés soufrés, peut entrer d'abord dans une section de prétraitement constituée par exemple d'une enceinte de prétraitement préremplie d'une solution alcaline, typiquement de la soude diluée à une concentration comprise entre 2 et 10% poids. La solution alcaline dans l'enceinte de prétraitement est renouvelée selon un cycle de fonctionnement compris entre 3 et 30 jours, en fonction de l'âge de la solution. Le prétraitement extrait une quantité variable d'espèces soufrées, dont des mercaptans. Suivant les unités, il est possible d'avoir des schémas différents de prétraitement avec, par exemple, au moins deux prétraitements opérant en parallèle ou encore un système d'appoint purge continu sur cette section. Cette liste est non exhaustive.

La charge hydrocarbonée entre ensuite dans une section d'extraction, classiquement une colonne d'extraction à contrecourant. La coupe hydrocarbonnée est alimentée en fond de colonne. Ladite colonne d'extraction est également alimentée par une solution alcaline régénérée, typiquement de la soude, en tête de colonne. La concentration en soude est alors comprise entre 5% et 25% en poids, préférentiellement entre 13 et 17% poids. La solution alcaline peut également contenir des solvants organiques polaires, par exemple de type dialkyl sulfoxide, amino-alcools, amino-hydroxy-alkyl, ethers, alkylamines, alkylpolyamines, alkylamides, seuls ou en mélange. La solution alcaline peut contenir, plus généralement, des hydroxydes de métaux alcalins, mais aussi des hydroxydes de métaux alcalino-terreux et des bases faibles.

La section d'extraction a pour fonction d'extraire la majorité des mercaptans présents dans la charge hydrocarbure. En effet, les mercaptans forment des mercaptides en présence de la solution alcaline qui se dissolvent préférentiellement dans la solution alcaline aqueuse et sont par conséquent extraits de la charge hydrocarbure. La charge hydrocarbure ainsi raffinée sort de la colonne en tête de colonne.

La solution alcaline sortant de la section d'extraction est chargée en mercaptides, par exemple en espèces de types thiolates de sodium RS-Na, correspondant aux mercaptans extraits, dissociés et recombinés avec les ions sodium Na+ si la solution alcaline est de la soude.

L'oxydation de la solution alcaline chargée en mercaptides sortant de l'extraction peut être réalisée dans différents types d'équipements appelés réacteur d'oxydation (oxydizer dans la terminologie anglo-saxonne). Ledit réacteur est généralement un ballon vertical alimenté par le fond, conçu de manière à mettre en contact l'agent oxydant, généralement gazeux avec la solution alcaline chargée en mercaptides en phase liquide, et éventuellement avec une phase hydrocarbure, en phase liquide également.

La technologie souvent rencontrée pour le réacteur d'oxydation est celle d'une colonne à garnissage, par exemple avec des anneaux Raschig ou des anneaux Pall ou d'autres types de garnissage. La réaction d'oxydation est exothermique et la température du fluide procédé dans le réacteur d'oxydation doit être maîtrisée. En effet, une température minimale est nécessaire pour que la réaction d'oxydation soit amorcée. Cependant, la température du procédé doit être contrôlée pour se situer dans la plage de fonctionnement optimale.

Les figures jointes sont des schémas de la section de régénération selon l'art antérieur (figure A) et selon l'invention dans ses différentes variantes (figures B, C et D). Les flux ou équipements qui ont la même signification dans l'art antérieur et selon la présente invention portent le même numéro.

La figure A illustre le schéma de la section de régénération selon l'art antérieur. Le flux de solution alcaline à régénérer (1a) est chauffé typiquement entre 40 et 50°C et préférentiellement entre 42 et 47°C dans un échangeur (2), en général à la vapeur industrielle, ou dans un équipement équivalent, avant l'ajout d'air par la conduite (5) et de catalyseur par la conduite (3) puis le flux (1c) entre dans un réacteur d'oxydation (4). La présence d'un catalyseur dissous (3) dans la solution alcaline promeut la réaction d'oxydation des mercaptides en disulfures notés RSSR'. Le catalyseur utilisé peut être de la famille des phtalocyanines. Les phtalocyanines de métaux comme le cobalt, le fer, le manganèse, le molybdène ou le vanadium peuvent être employés. De façon préférentielle, les phtalocyanines de cobalt ou de vanadium sont utilisées. Comme les phtalocyanines métalliques ne sont pas solubles dans le milieu aqueux, leurs dérivés sulfonatés tels que le trisulfonate ou le tetrasulfonate de phtalocyanine sont généralement utilisées dans le réacteur d'oxydation.

D'autres catalyseurs sont également utilisables. Le catalyseur est ajouté dans la solution alcaline à l'entrée du réacteur d'oxydation de manière à atteindre une concentration en catalyseur dans la solution alcaline comprise entre 10 et 1 000 ppm poids, préférentiellement entre 10 et 500 ppm poids. Les disulfures sont insolubles dans la phase alcaline. Optionnellement tune coupe hydrocarbonée (18) est injecté dans la solution alcaline usée, par exemple en amont du réacteur d'oxydation (4), par la conduite (6) dans le flux (1b). Ce flux hydrocarboné concentre les disulfures produits pendant la réaction d'oxydation.

La pression en tête du réacteur d'oxydation est comprise entre 0,1 et 1,0 MPa, de manière préférée entre 0,45 et 0,65 MPa.

Le milieu polyphasique sortant du réacteur d'oxydation (4) par la conduite (7) est envoyé vers un ballon séparateur (8) (« Disulfures Separator Drum » dans la terminologie anglo-saxonne). Le ballon séparateur (8) peut être remplacé par tout moyen physique de séparation entre une phase gaz, une phase hydrocarbure et une phase aqueuse. Dans ledit ballon, sont séparées une phase gaz, une phase hydrocarbure riche en espèces soufrées de type disulfures qui est purgée par la conduite (10), et une phase de solution alcaline partiellement régénérée (11) contenant une quantité de disulfures résiduels, typiquement de l'ordre de 200 ppm poids. L'excès d'agent oxydant appauvri en oxygène sort du ballon séparateur (8) par la conduite (9).

Une partie de la solution alcaline partiellement régénérée (11) est purgée par la conduite (12) pour maintenir constante la concentration de la solution alcaline afin de maintenir la qualité de l'extraction. En effet, une partie de la solution alcaline est consommée par des réactions secondaires produisant notamment des sels, par exemple des sels de Na₂CO₃ et de Na₂S. L'appoint de solution alcaline fraiche correspondant est réalisé par la conduite (13a).

Après purge et appoint, la solution alcaline partiellement régénérée est ensuite refroidie par un moyen de refroidissement (14), typiquement un échangeur fonctionnant avec de l'eau de refroidissement, ou un équipement équivalent, comme, par exemple, un aéro réfrigérant ou un échangeur utilisant un autre fluide réfrigérant que l'eau industrielle, à une température inférieure ou égale à 45°C, préférentiellement comprise entre 35°C et 45°C.

La solution alcaline partiellement régénérée refroidie (15) est ensuite divisée en deux flux :
- un flux (19) qui peut être renvoyé à la section extraction, et
- un flux (20) qui est envoyé à l'entrée de la section de régénération, « bypassant », c'est-à-dire contournant entièrement la section d'extraction.

Le flux (20) constitue un excès de solution alcaline partiellement régénérée qui alimente le réacteur d'oxydation et qui est utilisé comme moyen de refroidissement pour absorber une partie de la chaleur dégagée par la réaction d'oxydation, et permettre de contrôler la montée en température dans dudit réacteur.

La figure B illustre une variante de la présente invention dans laquelle une ligne (22a), permet de renvoyer un excès de solution alcaline recirculé vers le réacteur d'oxydation (4) pour contrôler sa montée en température. Le point d'arrivée du flux (22a) est situé dans le réacteur d'oxydation (4) lui-même, et peut consister en un ou plusieurs points d'arrivée. Dans le cas où plusieurs points d'introduction sont utilisés, on peut optionnellement faire varier le débit d'excès de solution alcaline recirculé dans chacun des points selon une loi permettant de contrôler la montée en température tout au long du réacteur d'oxydation (4).

La figure C illustre une variante de la présente invention qui permet encore de réduire l'excès de solution alcaline recirculé (22a) utilisé pour contrôler la température dans le réacteur d'oxydation (4). En effet, en équipant ce réacteur d'un moyen de refroidissement supplémentaire, comme un échangeur (23) ou tout autre moyen équivalent, on peut encore réduire le débit d'excès de solution alcaline recirculée renvoyée vers le réacteur d'oxydation (4) par la ligne (22a).

La figure D illustre une variante de la présente invention dans laquelle l'appoint de solution alcaline fraîche (13b) est effectué directement dans le réacteur, en un ou plusieurs points, et non dans le circuit de solution alcaline partiellement régénérée (11). Cette injection constitue le moyen de refroidissement permettant de contrôler la montée en température dans le réacteur d'oxydation(4).

### EXEMPLES SELON L'INVENTION

L'invention sera mieux comprise à la lecture des exemples comparatifs qui suivent.

On considère une unité d'extraction des mercaptans présents dans une phase hydrocarbure de type GPL, mélange d'alcanes à 2, 3, 4 et 5 atomes de carbone. La charge hydrocarbure à traiter provient d'une unité de distillation de condensats. Elle a un débit de 13,2 t/h et la composition suivante :

**Tableau 1: propriétés de la charge**

| Propriétés | | % pds |
|---|---|---|
| Ethane, | %pds | 0,3 |
| Propane, | %pds | 18,3 |
| Butane, | %pds | 77,2 |
| Pentane, | %pds | 2,2 |

| Impuretés | | |
|---|---|---|
| H₂S, | ppm pds | 5000 |
| COS | ppm pds | 225 |
| methyl-mercaptans, | ppm pds | 9000 |
| ethyl-mercaptans, | ppm pds | 5625 |
| propyl-mercaptans, | ppm pds | 150 |

On considèrera qu'une section de prélavage en amont de la section d'extraction est présente et que l'H2S et le COS y sont totalement éliminés.

La solution alcaline employée pour réaliser cette extraction est de la soude.

Pour tous les exemples, le débit de soude régénérée (19) qui alimente la section d'extraction est de 3,9 t/h avec une teneur en soude de 15 %poids et une température de 40°C. Après réaction avec les composés soufrés, la soude usée (1a), c'est-à-dire enrichie en composés soufrés, obtenue à la sortie de la section d'extraction (donc à l'entrée de la section de régénération) a une teneur en soude de 10,7% poids et un débit de 4,1 t/h.

Pour tous les exemples, la consommation de soude fraiche (13a) est nulle et la quantité de soude partiellement régénérée (12) purgée est nulle également (fonctionnement intermittent de l'appoint purge).

### Exemple 1 :

Cet exemple est selon l'art antérieur. Le procédé selon l'art antérieur est représenté par le schéma de la figure A. Un excès de soude recirculé de 9,1 t/h constitué par de la soude totalement régénérée à 40°C bypassant la section extraction par la ligne (20) est utilisé pour contrôler la montée en température dans le réacteur et obtenir une différence de température de 9°C entre l'entrée et la sortie du réacteur d'oxydation (4).

L'excès de soude « bypassant » la section d'extraction par la ligne (20) est mélangée avec la soude usée provenant de la section d'extraction (1a). Le mélange est ensuite chauffé à 45°C dans un échangeur (2) avant l'ajout d'air par la ligne (5) (0,2 t/h) et de catalyseur (3), puis entre dans le réacteur d'oxydation (4). La quantité de catalyseur injecté vise à maintenir une concentration en catalyseur de 250 ppm pds dans la solution alcaline qui rentre dans le réacteur.

Le réacteur d'oxydation (4) fonctionne à 0,59 MPa, en tête de réacteur. A la sortie du réacteur d'oxydation, la soude ne contient plus de thiolates de sodium et est saturée en oxygène dissous.

L'échangeur (2) servant à chauffer à 45°C le mélange soude usée et solution alcaline totalement régénérée consomme 70 kW, et l'échangeur (14) de refroidissement de la soude partiellement régénérée, servant à la refroidir de 54°C à 40°C, consomme 197 kW.

Le débit total de soude circulant dans le réacteur d'oxydation (4) est de 13,4 t/h.

La quantité de la phase hydrocarbure riche en disulfures (10) purgé est de 0,2 t/h.

### Exemple 2

Le procédé selon l'invention est simulé selon la variante décrite dans figure B.

Le réacteur d'oxydation (4) fonctionne dans les mêmes conditions de pression et température que dans l'exemple 1.

La soude usée (1a) est chauffée à 45°C dans l'échangeur (2) avant l'ajout d'air par la ligne (5) (0,2 t/h) et de catalyseur (3) puis entre dans le réacteur d'oxydation (4).

Un excès de soude recirculé (22a) de 6,7 t/h, constitué de soude partiellement régénérée, est envoyé directement dans le réacteur d'oxydation (4) pour contrôler la montée en température dans le réacteur et obtenir une différence de température de 9°C entre l'entrée et la sortie du réacteur d'oxydation (4).

L'échangeur (2) servant pour chauffer la soude enrichie à 45°C consomme 23 kW, et l'échangeur de refroidissement (14) de la soude partiellement régénérée, servant à refroidir de 54°C à 40°C, consomme 161 kW. Le gain d'utilités pour les échangeurs de chaleur est de 31 % par rapport aux utilités consommées pour ces équipements dans l'exemple 1.

Le débit de soude circulant dans le réacteur d'oxydation et à l'entrée du ballon séparateur (8) est de 11 t/h. Ainsi le débit circulant dans ces sections est réduit de 18% comparé au débit de l'exemple 1. La taille des équipements de ces sections est donc réduite de 18%, ce qui réduit l'inventaire de catalyseur et de solution alcaline de l'unité.

La quantité de phase hydrocarbure riche en disulfures (10) purgée est de 0,2 t/h.

### Exemple 3 :

Le procédé selon l'invention dans cette variante est représenté dans figure C. Un excès de soude recirculé (22a) est fixé à 0,1 t/h..

La soude usée est chauffée à 45°C dans un échangeur (2) avant l'ajout d'air par la ligne (5) (0,2 t/h) et de catalyseur (3), puis entre dans le réacteur d'oxydation (4).

L'échangeur (2) consomme 23 kW. Le réacteur d'oxydation (4) fonctionne dans les mêmes conditions de pression et température que dans l'exemple 1. Le réacteur d'oxydation est muni d'un serpentin (23) situé dans le réacteur d'oxydation et alimenté en eau industrielle qui permet de refroidir le fluide procédé. Ce serpentin absorbe une quantité de chaleur de 86 kW .

L'utilisation du serpentin et de l'excès de soude recirculé (22a) permet de contrôler la montée en température dans le réacteur et d'obtenir une différence de 9°C entre l'entrée et la sortie du réacteur, comme dans les exemples précédents.

Le débit de soude circulant dans le réacteur d'oxydation (4) et à l'entrée du ballon séparateur (8) est de 4,3 t/h. Ainsi le débit circulant dans ces sections est réduit de 68 % comparé au débit de l'exemple 1, et de 61 % comparé au débit de l'exemple 2. La taille des équipements de ces sections est donc réduite d'autant. L'inventaire de catalyseur et de solution alcaline de l'unité se trouvent également réduit.

L'échangeur de refroidissement de la soude partiellement régénérée (14), servant à refroidir de 54°C à 40°C, consomme 63 kW.

Le gain d'utilités consommées dans l'unité est de 36 % par rapport aux utilités consommées dans l'exemple 1, et identique à celui de l'exemple 2.

La quantité de la phase hydrocarbure riche en disulfures (10) purgée est de 0,2 t/h.

## Revendications

1. Procédé de régénération d'une solution alcaline usée utilisée dans une unité d'extraction des composés soufrés d'une coupe hydrocarbonée comprenant la suite d'étapes suivantes:
a) on envoie la solution alcaline usée à régénérer dans un réacteur d'oxydation (4) dans lequel elle est mise en contact avec un agent oxydant (5) et un catalyseur (3), et éventuellement avec une coupe hydrocarbonée, ladite solution alcaline usée étant préalablement réchauffée à une température comprise entre 40°C et 50°C, et dans lequel, la montée en température est contrôlée par un moyen de refroidissement constitué par un excès de solution alcaline envoyé directement dans ledit réacteur en un ou en plusieurs points,
b) on envoie les effluents du réacteur d'oxydation (4) dans un séparateur (8) duquel on extrait une phase hydrocarbure riche en disulfures (10) et une solution alcaline partiellement régénérée (11),
c) on refroidit la solution alcaline partiellement régénérée (11) issue de l'étape b) à une température inférieure ou égale à 45°C.

2. procédé de régénération d'une solution alcaline usée utilisée dans une unité d'extraction des composés soufrés d'une coupe hydrocarbonée selon la revendication 1 comprenant en outre l'étape suivante :
d) on divise la solution alcaline partiellement régénérée refroidie (15) issue de c) en deux flux :
- un premier flux (22a) qui constitue l'excès de solution alcaline recirculé et qui est renvoyé vers le réacteur d'oxydation (4),
- un second flux (22b).

3. Procédé de régénération d'une solution alcaline usée selon la revendication 1, dans lequel l'excès de solution alcaline est constitué de solution alcaline fraiche.

4. Procédé de régénération d'une solution alcaline usée selon la revendication 1, dans lequel le ou les points d'introduction de l'excès de solution alcaline dans le réacteur d'oxydation (4) sont munis d'un moyen de distribution ou d'un moyen de mélange.

5. Procédé de régénération d'une solution alcaline usée selon la revendication 1, dans lequel le ou les points d'introduction de l'excès de solution alcaline dans le réacteur d'oxydation (4) sont positionnés de façon à permettre de contrôler la montée en température dudit réacteur d'oxydation.

6. Procédé de régénération de solution alcaline usée selon la revendication 1, dans lequel le catalyseur employé dans le réacteur d'oxydation (4) est de type phtalocyanines de cobalt ou de vanadium.

7. Procédé de régénération d'une solution alcaline usée selon la revendication 1, dans lequel le catalyseur employé dans le réacteur d'oxydation (4) est ajouté dans la solution alcaline à l'entrée du réacteur d'oxydation de manière à atteindre une concentration en catalyseur dans la solution alcaline comprise entre 10 et 1 000 ppm poids, préférentiellement comprise entre 10 et 500 ppm poids.

8. Procédé de régénération d'une solution alcaline usée selon la revendication 1, dans lequel le réacteur d'oxydation (4) est équipé d'un moyen de refroidissement supplémentaire (23).

9. Procédé de régénération d'une solution alcaline usée selon la revendication 1, dans lequel l'excès de solution alcaline est refroidi à une température inférieure d'au moins 5°C à celle de la solution alcaline partiellement régénérée refroidie (15), avant d'être renvoyé vers le réacteur d'oxydation (4).

10. Procédé de régénération d'une solution alcaline usée selon la revendication 1, dans lequel la coupe hydrocarbonée traitée dans une unité d'extraction des composés soufrés peut aller du méthane au kérosène.

11. Installation de régénération de solution alcaline usée utilisée dans une unité d'extraction des composés soufrés d'une coupe hydrocarbonée, comprenant au moins :
- un équipement (2) permettant de chauffer la solution alcaline usée avant son introduction au réacteur d'oxydation à une température comprise entre 40°C et 50°C,
- un réacteur d'oxydation (4), dans lequel la solution alcaline usée est mise en contact avec un agent oxydant (5) et un catalyseur (3),
- une conduite permettant d'injecter un excès de solution alcaline directement dans le réacteur d'oxydation (4) en un ou en plusieurs points, constituant le moyen de refroidissement utilisé pour contrôler la montée en température dudit réacteur,
- un séparateur (8) alimenté par l'effluent issu du réacteur d'oxydation, duquel on extrait une phase hydrocarbure riche en disulfures (10) et une solution alcaline partiellement régénérée (11),
un moyen de refroidissement (14) permettant de refroidir la solution alcaline partiellement régénérée (11) issue du séparateur à une température inférieure ou égale à 45°C.

12. Installation de régénération de solution alcaline usée selon la revendication 11, dans laquelle la conduite permettant d'injecter l'excès de solution alcaline directement dans le réacteur d'oxydation est alimentée par une solution alcaline fraîche.

13. Installation de régénération d'une solution alcaline usée selon la revendication 11, dans laquelle la conduite permettant d'injecter l'excès de solution alcaline directement dans le réacteur d'oxydation (4) est alimentée par une solution alcaline partiellement régénérée (22a), issue de la division en deux flux de la solution alcaline partiellement régénérée refroidie (15) :
- un premier flux (22a) qui constitue l'excès de solution alcaline recirculé et qui est renvoyé vers le réacteur d'oxydation (4),
- un second flux (22b).

14. Installation de régénération d'une solution alcaline usée selon la revendication 11, dans laquelle le réacteur d'oxydation (4) est équipé d'un moyen de refroidissement supplémentaire (23).

15. Installation de régénération d'une solution alcaline usée selon la revendication 11, dans laquelle un moyen de refroidissement supplémentaire permet de refroidir l'excès de solution alcaline recirculé à une température inférieure d'au moins 5°C à celle de la solution alcaline partiellement régénérée refroidie (15).

## Patentansprüche

1. Verfahren zur Regeneration einer gebrauchten alkalischen Lösung, die in einer Einheit zur Extraktion schwefelhaltiger Verbindungen aus einer Kohlenwasserstofffraktion verwendet wird, umfassend die folgenden Schritte:
a) eine gebrauchte alkalische Lösung, die zu regenerieren ist, wird in einen Oxidationsreaktor (4) geschickt, in dem sie mit einem Oxidationsmittel (5) und einem Katalysator (3), und gegebenenfalls mit einer Kohlenwasserstofffraktion, in Kontakt gebracht wird, wobei die gebrauchte alkalische Lösung zuvor erneut auf eine Temperatur zwischen 40 °C und 50 °C erhitzt wird, und in dem der Temperaturanstieg durch ein Kühlmittel gesteuert wird, das aus einem Überschuss der alkalischen Lösung besteht, der direkt in den Reaktor an einem oder an mehreren Punkten geschickt wird,
b) die Abflüsse des Oxidationsreaktors (4) werden in einen Separator (8) geschickt, aus dem eine Kohlenwasserstoffphase (10) reich an Disulfiden und eine teilweise regenerierte alkalische Lösung (11) extrahiert werden,
c) die teilweise regenerierte alkalische Lösung (11) aus dem Schritt b) wird auf eine Temperatur kleiner oder gleich 45 °C abgekühlt.

2. Verfahren zur Regeneration einer gebrauchten alkalischen Lösung, die in einer Einheit zur Extraktion schwefelhaltiger Verbindungen aus einer Kohlenwasserstofffraktion verwendet wird, nach Anspruch 1, außerdem umfassend den folgenden Schritt:
d) die abgekühlte teilweise regenerierte alkalische Lösung (15) aus c) wird in zwei Ströme geteilt:
- einen ersten Strom (22a), der den Überschuss der rezirkulierten alkalischen Lösung darstellt, und der zu dem Oxidationsreaktor (4) zurückgeschickt wird,
- einen zweiten Strom (22b).

3. Verfahren zur Regeneration einer gebrauchten alkalischen Lösung nach Anspruch 1, wobei der Überschuss der alkalischen Lösung aus frischer alkalischer Lösung besteht.

4. Verfahren zur Regeneration einer gebrauchten alkalischen Lösung nach Anspruch 1, wobei der oder die Punkte zum Einbringen des Überschusses der alkalischen Lösung in den Oxidationsreaktor (4) mit einem Mittel zum Verteilen oder mit einem Mittel zum Mischen versehen sind.

5. Verfahren zur Regeneration einer gebrauchten alkalischen Lösung nach Anspruch 1, wobei der oder die Punkte zum Einbringen des Überschusses der alkalischen Lösung in den Oxidationsreaktor (4) derart positioniert werden, dass die Steuerung des Temperaturanstiegs des Oxidationsreaktors gestattet wird.

6. Verfahren zur Regeneration einer gebrauchten alkalischen Lösung nach Anspruch 1, wobei der Katalysator, der in dem Oxidationsreaktor (4) verwendet wird, vom Typ Kobalt- oder Vanadiumphthalocyanine ist.

7. Verfahren zur Regeneration einer gebrauchten alkalischen Lösung nach Anspruch 1, wobei der Katalysator, der in dem Oxidationsreaktor (4) verwendet wird, in die alkalische Lösung am Eingang des Oxidationsreaktors derart zugegeben wird, dass eine Konzentration an Katalysator in der alkalischen Lösung zwischen 10 und 1 000 ppm, bezogen auf das Gewicht, vorzugsweise zwischen 10 und 500 ppm, bezogen auf das Gewicht, erzielt wird.

8. Verfahren zur Regeneration einer gebrauchten alkalischen Lösung nach Anspruch 1, wobei der Oxidationsreaktor (4) mit einem ergänzenden Kühlmittel (23) ausgestattet ist.

9. Verfahren zur Regeneration einer gebrauchten alkalischen Lösung nach Anspruch 1, wobei der Überschuss der alkalischen Lösung auf eine Temperatur abgekühlt wird, die mindestens 5 °C kleiner ist als jene der abgekühlten teilweise regenerierten alkalischen Lösung (15), bevor sie zu dem Oxidationsreaktor (4) geschickt wird.

10. Verfahren zur Regeneration einer gebrauchten alkalischen Lösung nach Anspruch 1, wobei die Kohlenwasserstofffraktion, die in einer Einheit zur Extraktion schwefelhaltiger Verbindungen behandelt wird, von Methan bis Kerosin reichen kann.

11. Anlage zur Regeneration einer gebrauchten alkalischen Lösung, die in einer Einheit zur Extraktion schwefelhaltiger Verbindungen aus einer Kohlenwasserstofffraktion verwendet wird, mindestens umfassend:
- eine Ausrüstung (2), die es gestattet, die gebrauchte alkalische Lösung vor ihrem Einbringen in den Oxidationsreaktor auf eine Temperatur zwischen 40 °C und 50 °C zu erhitzen,
- einen Oxidationsreaktor (4), in dem die gebrauchte alkalische Lösung mit einem Oxidationsmittel (5) und einem Katalysator (3) in Kontakt gebracht wird,
- eine Leitung, die es gestattet, einen Überschuss der alkalischen Lösung direkt in den Oxidationsreaktor (4) an einem oder mehreren Punkten zu injizieren, und die das Kühlmittel darstellt, das zur Steuerung des Temperaturanstiegs des Reaktors verwendet wird,
- einen Separator (8), der mit dem Abfluss aus dem Oxidationsreaktor gespeist wird, und aus dem eine Kohlenwasserstoffphase (10) reich an Disulfiden und eine teilweise regenerierte alkalische Lösung (11) extrahiert werden,
- ein Kühlmittel (14), das es gestattet, die teilweise regenerierte alkalische Lösung (11) aus dem Separator auf eine Temperatur kleiner oder gleich 45 °C abzukühlen.

12. Anlage zur Regeneration einer gebrauchten alkalischen Lösung nach Anspruch 11, wobei die Leitung, die es gestattet, den Überschuss der alkalischen Lösung direkt in den Oxidationsreaktor zu injizieren, mit einer frischen alkalischen Lösung gespeist wird.

13. Anlage zur Regeneration einer gebrauchten alkalischen Lösung nach Anspruch 11, wobei die Leitung, die es gestattet, den Überschuss der alkalischen Lösung direkt in den Oxidationsreaktor (4) zu injizieren, mit einer teilweise regenerierten alkalischen Lösung (22a) aus der Teilung der abgekühlten teilweise regenerierten alkalischen Lösung (15) in zwei Ströme gespeist wird:
- einen ersten Strom (22a), der den Überschuss der rezirkulierten alkalischen Lösung darstellt, und der zu dem Oxidationsreaktor (4) zurückgeschickt wird,
- einen zweiten Strom (22b).

14. Anlage zur Regeneration einer gebrauchten alkalischen Lösung nach Anspruch 11, wobei der Oxidationsreaktor (4) mit einem ergänzenden Kühlmittel (23) ausgestattet ist.

15. Anlage zur Regeneration einer gebrauchten alkalischen Lösung nach Anspruch 11, wobei es ein ergänzendes Kühlmittel gestattet, den Überschuss der rezirkulierten alkalischen Lösung auf eine Temperatur abzukühlen, die mindestens 5 °C kleiner ist als jene der abgekühlten teilweise regenerierten alkalischen Lösung (15).

## Claims

1. A process for the regeneration of a spent alkaline solution used in a unit for the extraction of sulphur-containing compounds from a hydrocarbon cut, comprising the following series of steps:
a) sending the spent alkaline solution to be regenerated to an oxidation reactor (4) in which it is brought into contact with an oxidizing agent (5) and a catalyst (3), and optionally with a hydrocarbon cut, said spent alkaline solution having been heated to a temperature in the range 40°C to 50°C, and in which the rise in temperature is controlled by a cooling means constituted by an excess alkaline solution sent directly to said reactor, at one or more points,
b) sending the effluents from the oxidation reactor (4) to a separator (8) from which a hydrocarbon phase which is rich in disulphides (10) and a partially regenerated alkaline solution (11) are extracted,
c) cooling the partially regenerated alkaline solution (11) obtained from step b) to a temperature of 45°C or less.

2. The process for the regeneration of a spent alkaline solution used in a unit for the extraction of sulphur-containing compounds from a hydrocarbon cut as claimed in claim 1, further comprising the following step:
d) dividing the cooled partially regenerated alkaline solution (15) obtained from c) into two streams:
- a first stream (22a) which constitutes the excess of the recirculated alkaline solution and which is sent to the oxidation reactor (4), and
- a second stream (22b).

3. The process for the regeneration of a spent alkaline solution as claimed in claim 1, in which the excess alkaline solution is constituted by fresh alkaline solution.

4. The process for the regeneration of a spent alkaline solution as claimed in claim 1, in which the point or points for the introduction of the excess alkaline solution into the oxidation reactor (4) are provided with a distribution means or a mixing means.

5. The process for the regeneration of a spent alkaline solution as claimed in claim 1, in which the point or points for the introduction of the excess alkaline solution into the oxidation reactor (4) are positioned in a manner such as to allow the rise in temperature of said oxidation reactor to be controlled.

6. The process for the regeneration of a spent alkaline solution as claimed in claim 1, in which the catalyst employed in the oxidation reactor (4) is of the cobalt or vanadium phthalocyanin type.

7. The process for the regeneration of a spent alkaline solution as claimed in claim 1, in which the catalyst employed in the oxidation reactor is added to the alkaline solution at the inlet to the oxidation reactor in a manner such as to obtain a concentration of catalyst in the alkaline solution in the range 10 to 1000 ppm by weight, preferably in the range 10 to 500 ppm by weight.

8. The process for the regeneration of a spent alkaline solution as claimed in claim 1, in which the oxidation reactor (4) is equipped with a supplemental cooling means (23).

9. The process for the regeneration of a spent alkaline solution as claimed in claim 1, in which the excess alkaline solution is cooled to a temperature which is at least 5°C lower than that of the cooled partially regenerated alkaline solution (15) before being returned to the oxidation reactor (4).

10. The process for the regeneration of a spent alkaline solution as claimed in claim 1, in which the hydrocarbon cut treated in the unit for extraction of sulphur-containing compounds ranges from methane or kerosene.

11. A facility for the regeneration of a spent alkaline solution used in a unit for the extraction of sulphur-containing compounds from a hydrocarbon cut, comprising at least:
- a piece of equipment (2) for heating the spent alkaline solution before it is introduced into the oxidation reactor to a temperature in the range 40°C to 50°C,
- an oxidation reactor (4) in which the spent alkaline solution is brought into contact with an oxidizing agent (5) and a catalyst (3),
- a conduit for injecting an excess alkaline solution directly into the oxidation reactor (4) at one or more points, constituting the cooling means used to control the rise in temperature of said reactor,
- a separator (8) supplied with the effluent obtained from the oxidation reactor (4), from which a hydrocarbon phase which is rich in disulphides (10) and a partially regenerated alkaline solution (11) are extracted,
- a cooling means (14) for cooling the partially regenerated alkaline solution (11) obtained from the separator to a temperature of 45°C or less.

12. The facility for the regeneration of a spent alkaline solution as claimed in claim 11, in which the conduit for injecting the excess alkaline solution directly into the oxidation reactor (4) is supplied with a fresh alkaline solution.

13. The facility for the regeneration of a spent alkaline solution as claimed in claim 11, in which the conduit for injecting the excess alkaline solution directly into the oxidation reactor (4) is supplied with a partially regenerated alkaline solution (22a) obtained by dividing the cooled partially regenerated alkaline solution (15) into two streams:
- a first stream (22a) which constitutes the recirculated excess alkaline solution and which is returned to the oxidation reactor (4),
- a second stream (22b).

14. The facility for the regeneration of a spent alkaline solution as claimed in claim 11, in which the oxidation reactor (4) is equipped with a supplemental cooling means (23).

15. The facility for the regeneration of a spent alkaline solution as claimed in claim 11, in which a supplemental cooling means is used to cool the recirculated excess alkaline solution to a temperature which is at least 5°C lower than that of the cooled partially regenerated alkaline solution (15).
